**Europäisches Patentamt**

**European Patent Office**

**Office européen des brevets**

(11) Veröffentlichungsnummer: **0 268 076 B1**

## EUROPÄISCHE PATENTSCHRIFT

(45) Veröffentlichungstag der Patentschrift: **25.09.91**

(51) Int. Cl.⁵: **B60T 8/50**

(21) Anmeldenummer: **87115052.0**

(22) Anmeldetag: **15.10.87**

(54) Plungersystem zum Modulieren eines Bremsdruckes.

(30) Priorität: **14.11.86 DE 3638980**

(43) Veröffentlichungstag der Anmeldung:
**25.05.88 Patentblatt 88/21**

(45) Bekanntmachung des Hinweises auf die
Patenterteilung:
**25.09.91 Patentblatt 91/39**

(84) Benannte Vertragsstaaten:
**AT DE FR GB**

(56) Entgegenhaltungen:
**DE-B- 2 001 581**
**DE-B- 2 165 617**
**DE-B- 2 212 912**
**US-A- 3 907 376**
**US-A- 4 575 161**

(73) Patentinhaber: **ROBERT BOSCH GMBH**
**Postfach 50**
**W-7000 Stuttgart 1(DE)**

(72) Erfinder: **Bernhardt, Wolfgang, Dipl.-Ing.**
**Tubizer Strasse 21**
**W-7015 Korntal(DE)**
Erfinder: **Tischer, Michael, Dipl.-Ing.**
**Schillerstrasse 14**
**W-7101 Abstatt(DE)**

## Beschreibung

### Stand der Technik

Die Erfindung geht aus von einem Plungersystem in einer Bremsleitung zwischen einem Hauptbremszylinder und einem Radbremszylinder eines Fahrzeuges zum Modulieren eines Bremsdruckes bei von einem Sensor erfaßter Blockiergefahr von Rädern eines Fahrzeuges gemäß Oberbegriff des Hauptanspruchs. In der DE-AS 22 12 912 wird eine Blockierschutz-Einrichtung für Kraftfahrzeuge mit einem Bremskraftminderer gezeigt, der in die zur Hinterachse führende Bremsleitung eingesetzt ist. Dieser Bremskraftminderer weist einen von einem Ventil überwachten und von einer Stange gesteuerten Durchfluß auf und besitzt einen Minderkolben, der unter Druckmitteleinwirkung diesen Durchfluß schließt. Ein Schließen des Durchflusses findet dann statt, wenn ein Rad der Hinterachse blockiert. Hierzu wird eine Druckwechselkammer unter Druck gesetzt, und der Minderkolben schließt das Ventil.

Mit dieser Vorrichtung kann zwar ein wirkungsvoller Blockierschutz erreicht werden, jedoch hat sie beim Durchdrehen von Rädern, bei dem eine Antriebsschlupfregelung wirksam werden muß, keine Auswirkung.

### Vorteile der Erfindung

Das erfindungsgemäße Plungersystem mit den Merkmalen des Hauptanspruchs hat demgegenüber den Vorteil, daß es nicht nur auf eine Blokkiergefahr der Räder sondern auch auf eine Durchdrehen von Rädern anspricht. Das bedeutet, daß mit diesem erfindungsgemäßen Plungersystem sowohl eine Antiblockierregelung wie auch eine Antriebsschlupfregelung erreicht wird.

Erfindungsgemäß hängt die jeweilige Regelung, d.h. die Antiblockierregelung und die Antriebsschlupfregelung, jeweils von der axialen Bewegung des Kolbens ab. Dieser Kolben übernimmt auf sehr einfache aber äußerst wirkungsvolle Weise beide Funktionen.

In Normallage nimmt der Kolben eine Mittelstellung ein, in welcher die Axialbohrung nicht verschlossen ist. Das heißt, bei einem normalen Bremsvorgang fließt Bremsflüssigkeit vom Hauptbremszylinder durch die Bremsleitung, den einen Druckraum, die Axialbohrung, den anderen Druckraum bis zum Radbremszylinder.

Zum Verschließen der Axialbohrung zu den Druckräumen hin sind Ventilelemente vorgesehen. Dabei geht die Axialbohrung beidseits zu den Druckräumen hin in Ventilbohrungen unter Ausbildung eines schulterartigen Absatzes über. In diesem Bereich verjüngt sich die Stange unter Ausbildung von je einer Schulter zu sogenannten Stangenendteilen, die von je einem entgegengesetzt ausgerichteten, federgelagerten Ventilkegel besetzt sind. Diese Ventilkegel schlagen mit ihren Kegelspitzen an den Stangenschultern an und erreichen damit eine definierte Endlage. Diese definierte Endlage ist so ausgelegt. daß die Ventilkegel bei Mittelstellung des Kolbens nicht ihren Ventilsitz einnehmen können und damit der ungehinderte Durchfluß von Bremsflüssigkeit vom Hauptbremszylinder zu Radbremszylinder gewährleistet ist.

Wird nun beispielsweise ein Blockieren von Rädern festgestellt, so erfolgt ein Verschieben des Kolbens in Richtung des Ventilkegels der Druckkammer zum Hauptbremszylinder. Hierdurch wird die Axialbohrung verschlossen und gleichzeitig Flüssigkeit aus dem Druckraum zurück zum Hauptbremszylinder gedrückt. Der gegenüberliegende Druckraum zum Radbremszylinder nimmt an Volumen zu, wodurch Bremsflüssigkeit aus dem Radbremszylinder gezogen und dieser entlastet wird.

Beim entgegengesetzten Verschieben des Kolbens wird in dem Druckraum zum Radbremszylinder ein Bremsdruck unabhängig vom Betätigen des Hauptbremszylinders erzeugt, und damit ein Druckdrehen von Rädern verhindert.

Das axiale Verschieben des Kolbens in der gewünschten Richtung, je nachdem ob ein Blockieren oder ein Durchdrehen der Räder festgestellt wird geschieht über Beaufschlagung von zwei Druckräumen, welche über einen Kolbenmittelteil abgetrennt sind. Diese Druckräume können wechselweise mit Druckmedium beaufschlagt werden, je nachdem ob ein Blockieren der Räder oder ein Durchdrehen der Räder festgestellt wird. Die Steuerung der Beaufschlagung übernimmt ein Wegeventil. Das Druckmedium für dieser Druckräume selbst stammt aus einem Versorgungssystem, welches von einer Steuerung geregelt wird, die auch die Steuerung des Wegeventils aufgrund von Signalen des Radsensors übernimmt.

Bevorzugt soll sich der Kolbenmittelteil in dem einen Druckraum gegen eine Druckfeder abstützen. Hierzu ist vorgesehen, daß der Druckfeder zum Kolbenmittelteil hin eine Anschlagsscheibe aufgesetzt ist, welche an einer Gehäuseschulter bei Erreichen der Mittelstellung anschlägt. Wenn dann in den Druckräumen jeweils der gleiche Druck herrscht, legt sich der Kolbenmittelteil an der Anschlagschulter an und nimmt damit seine gewünschte Mittelstellung ein. Um diesen Kolbenhub kontrollieren zu können, kann der Kolben über eine Stange mit einem Weggeber verbunden sein, der ein entsprechendes Signal an die Steuerung abgibt. Erreicht der Kolben beispielsweise nicht seine Mittelstellung, so genügt es, wenn über die Steuerung der entsprechenden Druckkammer Druckmedium zugeführt wird, bis der Kolben seine Mittelstellung erreicht.

Im Rahmen der Erfindung liegt auch ein entsprechendes Verfahren, bei bei dem der Kolben in Normallage in eine Mittelstellung gebracht wird, in der die Axialbohrung zwischen den Druckräumen zum Hauptbremszylinder und zum Radbremszylinder offen ist. Beim Blockieren von Rädern wird dagegen der Kolben in die eine Richtung axial veschoben, wodurch ein Verschließen der Axialbohrung stattfindet. Beim Durchdrehen der Räder wird der Kolben in die andere Richtung axial verschoben, wobei ebenfalls die Axialbohrung geschlossen und ein selbständiger Bremsdruck erzeugt wird. Insgesamt ist das vorliegende erfindungsgemäße Plungersystem sehr einfach aufgebaut und besitzt wenig Verschließteile.

Zeichnung

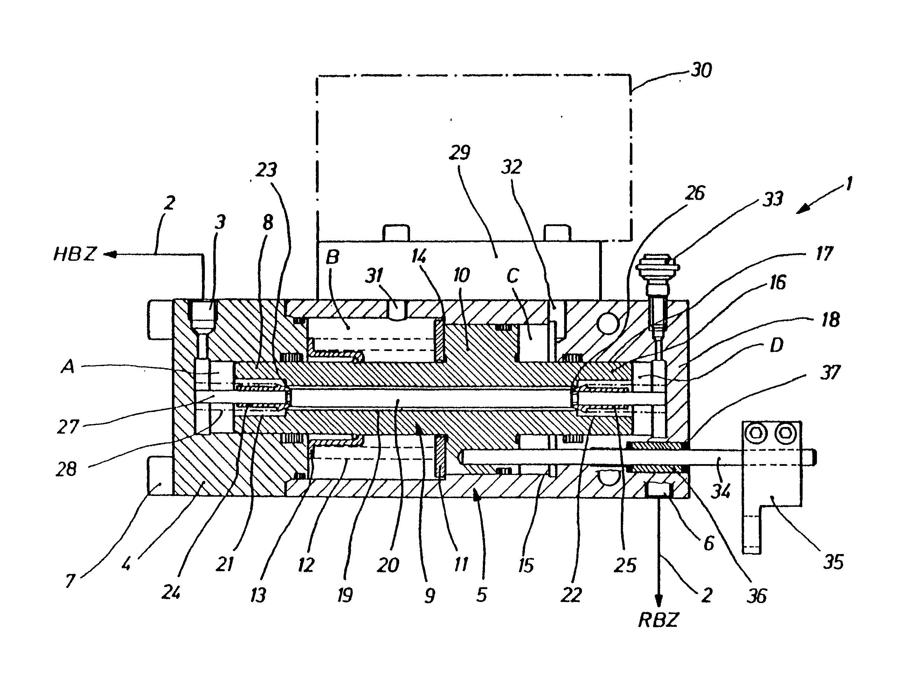

Die Erfindung wird nachfolgend anhand der Zeichnung erläutert. Diese zeigt in ihrer einzigen Figur einen Längsschnitt durch ein Plungersystem in einer nicht näher gezeigten Bremsanlage von Fahrzeugen zur Modulierung des Bremsdruckes beim Blockieren und Durchdrehen von Fahrzeugrädern.

Das erfindungsgemäße Plungersystem 1 ist einer Bremsleitung 2 zwischen einem nicht näher gezeigten Hauptbremszylinder HBZ und einem nicht näher gezeigten Radbremszylinder RBZ eingeschaltet. Hierzu weist das Plungersystem 1 eine Anschlußbohrung 3 in einem Deckel 4 für die Bremsleitung 2 auf, wobei der Deckel 4 ein zylindrisches Gehäuse 5 verschließt. In diesem Gehäuse 5 ist eine Auslaßbohrung 6 als Anschluß an die Bremsleitung 2 zum Radbremszylinder RBZ vorgesehen. Deckel 4 und Gehäuse 5 sind über entsprechende Zylinderschrauben 7 miteinander verbunden.

Die Anschlußbohrung 3 mündet in einem axialen, zylindrischen Druckraum A im Deckel 4, in den ein Kolbenteil 8 eines Kolbens 9 eingreift.

Gehäuseseitig durchzieht der Kolbenteil 8 einen von Gehäuse 5, Deckel 4 sowie manschettenartig querschnittlich vergrößerten Kolbenmittelteil 10 gebildeten Druckraum B. Zum Druckraum B hin ist der Kolbenmittelteil 10 von einer Anschlagscheibe 11 unterlegt, gegen die sich eine Druckfeder 12 auf der einen Siete abstützt. Auf der anderen Seite beaufschlagt die Druckfeder 12 einen sich gegen den Deckel 4 abstützenden Federteller 13. Letzterer umgibt den Kolbenteil 8. In Endlage schlägt die Anschlagscheibe 11 an einer vom Gehäuse 5 gebildeten Schulter 14 an und begrenzt so eine Mittelstellung des Kolbens 9.

Gegenüberliegend zu der Anschlagsscheibe 11 begrenzt der Kolbenmittelteil 10 zusammen mit einer Gehäuseeinschnürung 15 einen weiteren Druckraum C, der von einem an den Kolbenmittelteil 10 anschließenden Kolbenendteil 16 durchsetzt ist. Dieser greift in eine Zylinderbohrung 17 im Gehäuseboden 18 ein und bildet dort einen weiteren Druckraum D, aus dem die Bremsleitung 2 über die Auslaßbohrung 6 ausmündet.

Der Kolben 9 weist eine Axialbohrung 19 auf, die eine Stange 20 mit mit soviel Spiel aufnimmt, daß ein ausreichender Durchflußquerschnitt für die Bremsflüssigkeit vorhanden ist. Alternativ kann die Stange auch Kerben, Nuten usw. tragen. Beidseits geht die Axialbohrung 19 im Bereich von Kolbenteil 8 und Kolbenendteil 16 in eine erweiterte Ventilbohrung 21 bzw. 22 unter Ausbildung jeweils eines schulterartigen Absatzes 23 über, der jeweils einen Ventilsitz für einen Ventilkegel 24 bzw. 25 ausbildet. Zu den Ventilkegeln 24 bzw. 25 hin bildet die Stange 20 jeweils Schultern 26 aus, an denen sich die Ventilkegel 24 bzw. 25 abstützen können. Die Ventilkegel 24 bzw. 25 sind dabei mit geringem Spiel auf gegenüber der Stange 20 verjüngten Stangenendteile 27 geführt und stehen unter der Einwirkung von Druckfedern 28.

Mit dem Gehäuse 4 ist eine Anschlußplatte 29 verbunden, auf welcher ein gestrichelt dargestelltes Wegeventil 30 festliegt. Über dieses Wegeventil 30 kann entweder der Druckraum B über einen Einlaß 31 oder der Druckraum C über eine Verbindungsbohrung 32 mit Druckmedium beaufschlagt werden.

Für den Druckraum D ist bei 33 ein Entlüfterventil vorgesehen.

Weiterhin liegt im Kolbenmittelteil 10 eine Stange 34 fest, welche durch den Gehäuseboden 18 nach außen führt. Dort ist ihr ein Klemmstück 35 aufgesetzt, welches zum Antrieb eines nicht näher dargestellten Weggebers zur Erfassung des Kolbenhubes dient. Zur Führung der Stange 34 sind im Gehäuseboden 18 eine Hülse 36 und ein Abstreifring 37 angeordnet.

Das Plungersystem 1 arbeitet folgendermaßen:

In Normallage, d.h. wenn in den Druckräumen B und C gleicher Druck herrscht, wird der Kolben 9 von der Druckfeder 12 in Mittelstellung gehalten, wobei die Anschlagscheibe 11 an der Schulter 14 und der Federteller 13 an der der Schulter 14 abgewandten Stirnfläche des Druckraumes B anliegt. In dieser in der Figur gezeigten Stellung können beide Ventilkegel 24 und 25 keinen Ventilsitz einnehmen, da sie sich unter dem Druck ihrer jeweiligen Druckfeder 28 gegen die Schultern der Stange 20 abstützen, dabei jedoch nicht dem schulterartigen Absatz 23 zwischen Axialbohrung 19 und Ventilbohrung 21 bzw 22 anliegen. Hierdurch ist eine normale Verbindung zwischen Hauptbremszylinder HBZ und Radbremszylinder RBZ hergestellt. Bei normaler Bremsung pflanzt sich dann der Bremsdruck über die Kammer A, den Ringspalt zwischen Kolben 9 und Stange 20 und die Kammer D zum Radbremszylinder RBZ fort. Entsprechend verläuft auch der Bremsdruckabbau.

Sollte ein nicht näher gezeigter Sensor am Rad ein Bremsblockieren der Räder anzeigen, so wird die Kammer C über ein nicht näher gezeigtes Energieversorgungssystem über die Verbindungsbohrung 32 mit einem Druckmedium beaufschlagt. Damit läuft der Kolben 9 gegen den Druck der Druckfeder 12 nach links, so daß der Ventilkegel 24 seinen Ventilsitz einnimmt und die Verbindung zwischen Druckraum A und Druckraum D verschlossen wird. Gleichzeitig wird Bremsflüssigkeit aus dem Druckraum A zum Hauptbremszylinder HBZ verdrängt. Ebenfalls gleichzeitig wird die Druckkammer D vergrößert, so daß ein Druckabbau im Radbremszylinder RBZ stattfindet. Wird nun die Druckkammer B über den Einlaß 31 mit einem Druckmedium gefüllt, so erhöht sich wiederum der Bremsdruck in der Bremsleitung 2 zum Radbremszylinder RBZ. Durch kontrollierte Druckbeaufschlagung der Druckkammern B und C läßt sich somit in bekannter Weise der Bremsdruck am Radbremszylinder RBZ modulieren. Dabei erlaubt die Anordnung der Rückschlagventile zusätzlich eine Bremsdruckminderung im Radbremszylinder RBZ wenn der Fahrer den Bremsdruck reduziert.

Sollte der Sensor an den Antriebsrädern den Fall einer Antriebsschlupfregelung anzeigen, wird der Druckraum B mit Druckmedium beaufschlagt, welches an der Anschlagscheibe 11 vorbeifließt. und den Kolben 9 nach rechts treibt. Nach kurzem Hub sitzt der Kolben 9 mit seinem schulterartigen Absatz 23 dem Ventilkegel 25 auf, so daß ebenfalls die Verbindung von Druckraum A zu Druckraum D geschlossen ist. Bei weiterem Hub des Kolbens 9 wird das Volumen der Druckkammer D verkleinert und ein Bremsdruck erzeugt, der das Durchdrehen der Antriebsräder abbremst.

Wegeventil 30 und das nicht gezeigte Versorgungssystem für die Druckkammern B und C mit Druckmedium werden von einer Steuerung in bekannter Form geregelt. Diese Steuerung erfaßt auch über die Stange 34 den Kolbenhub, so daß insbesondere in Normallage die genaue Mittelstellung des Kolbens eingehalten werden kann, ohne daß eines der Rückschlagventile versehentlich geschlossen wird.

**Patentansprüche**

1. Plungersystem (1) in einer Bremsleitung (2) zwischen einem Hauptbremszylinder (HBZ) und einem Radbremszylinder (RBZ) eines Fahrzeugs zum Modulieren eines Bremsdrukkes bei von einem Sensor erfaßter Blockiergefahr von Rädern eines Fahrzeugs mit einem in einem Gehäuse (5) axial verschiebbaren Kolben (9), der sowohl in einen veränderbaren Druckraum (A) zum Hauptbremszylinder (HBZ), als auch in einen veränderbaren Druckraum (D) zum Radbremszylinder (RBZ) hin eingreift und eine von einer Stange (20) durchsetzte Axialbohrung (19) zwischen den beiden Druckräumen aufweist und einen Ventilkegel. (24) besitzt, der gleichachsig zur Axialbohrung (19) ausgerichtet ist und bei einer Veschiebung des Kolbens (9) aus seiner Normallage zum Hauptbremszylinder (HBZ) als Folge einer erfaßten Blockiergefahr die Axialbohrung (19) verschließt, dadurch gekennzeichnet, daß der Kolben (9) aus der Normallage in Richtung zum Radbremszylinder (RBZ) verschiebbar ist, und daß der Axialbohrung (19) ein zweiter Ventilkegel (25) zugeordnet ist, der bei einer Verschiebung des Kolbens (9) aus seiner Normallage zum Radbremszylinder (RBZ) anläßlich eines vom Sensor erfaßten unzulässigen Antriebsschlupfes die Axialbohrung (19) verschließt.

2. Plungersystem nach Anspruch 1, dadurch gekennzeichnet, daß die Axialbohrung (19) beidseits zu den Druckräumen (A, D) hin in Ventilbohrungen (21, 22) unter Ausbildung eines schulterartigen Absatzes (23) übergeht, wobei in diesem Bereich sich die Stange (20) unter Ausbildung von je einer Schulter (26) zu Stangenendteilen (27) verjüngt, die von je einem entgegengesetzt ausgerichteten, federgelagerten Ventilkegel (24, 25) besetzt sind, welche mit ihren Kegelspitzen an der Stangenschulter (26) anschlagen.

3. Plungersystem nach Anspruch 2, dadurch gekennzeichnet, daß der Kolben (9) in Normallage eine Mittelstellung einnimmt, bei der beide Ventilkegel (24, 25) an der jeweiligen Stangenschulter (26) anschlagen, jedoch zum schulterartigen Absatz (23) der Ventilbohrung (21, 22) hin einen freien Durchlaß bilden.

4. Plungersystem nach wenigstens einem der Ansprüche 1 bis 3, dadurch gekennzeichnet, daß der Kolben (9) über einen Kolbenmittelteil (10) zwei Druckräume (B und C) abtrennt, welche wechselweise mit Druckmedium über ein Wegeventil (30) und gegebenenfalls Einlässe (31 bzw. 32) von einem Energieversorgungssystem gesteuert über den Radsensor beaufschlagbar und damit der Kolben axial verschiebbar ist.

5. Plungersystem nach Anspruch 4, dadurch gekennzeichnet, daß sich der Kolbenmittelteil (10) in einem Druckraum (B) gegen eine Druckfeder (12) abstützt.

6. Plungersystem nach Anspruch 5, dadurch gekennzeichnet, daß die Druckfeder (12) auf der einen Seite auf einem den Kolben (9) umgebenden Federteller (13) aufsitzt und auf der anderen Seite an einer den Kolbenmittelteil (10) unterfangenden Anschlagsscheibe (11) anschlägt.

7. Plungersystem nach Anspruch 6, dadurch gekennzeichnet, daß die Anschlagsscheibe (11) in Mittelstellung des Kolbens (9) an einer Gehäuseschulter (14) anschlägt.

8. Plungersystem nach einem der Ansprüche 5 bis 7, dadurch gekennzeichnet, daß durch jeweils eine Feder in den zu beiden Seiten des Kolbenmittelteils (10) befindlichen Druckräumen (B, C) das Kolbenmittelteil (10) mit zu beiden Seiten angeordneten Anschlagscheiben (11) an beiden Druckräumen (B, C) zugeordneten Anschlagschultern anschlägt.

9. Plungersystem nach wenigstens einem der Ansprüche 1 bis 8, dadurch gekennzeichnet, daß der Kolben (9) über eine mit ihm verbundene Stange (34) mit einem Weggeber zur Erfassung des Kolbenhubs gekoppelt ist.

10. Verfahren zum Modulieren des Bremsdruckes bei von einem Sensor erfaßter Blockiergefahr von Rädern eines Fahrzeugs mit einem in einem Gehäuse axial verschiebbaren Kolben, der auf einer Seite in einen veränderbaren Druckraum zum Hauptbremszylinder, und auf der anderen Seite in einen veränderbaren Druckraum zum Radbremszylinder hin eingreift und eine von einer Stange durchsetzte Axialbohrung zwischen den beiden Druckräumen aufweist, wobei die Axialbohrung eine Verbindung bildet, welche beim Blockieren von Rädern verschlossen wird, dadurch gekennzeichnet, daß die durch die Axialbohrung gebildete Verbindung auch beim Durchdrehen von Rädern verschlossen wird.

11. Verfahren nach Anspruch 10, dadurch gekennzeichnet, daß die Normallage des Kolbens die Mittelstellung ist, in der die Axialbohrung zwischen den Druckräumen zum Hauptbremszylinder und zum Radbremszylinder offen ist.

12. Verfahren nach Anspruch 10 oder 11, dadurch gekennzeichnet, daß beim Blockieren von Rädern der Kolben axial in eine Richtung verschoben und damit die Axialbohrung verschlossen wird, während beim Durchdrehen von Rädern ein axiales Verschieben des Kolbens in die andere Richtung und damit ein Verschließen der Axialbohrung stattfindet.

13. Verfahren nach einem der Ansprüche 10 bis 12, dadurch gekennzeichnet, daß das axiale Verschieben des Kolbens durch wechselweises Beaufschlagen von Druckräumen eines Kolbenmittelteils mit Druckmedium erfolgt.

**Claims**

1. Plunger system (1) in a brake line (2) between a main brake cylinder (HBZ) and a wheel brake cylinder (RBZ) of a vehicle for modulating the brake pressure in the case of a danger, detected by a sensor, of blocking of wheels of a vehicle by means of a piston (9) which is axially displaceable in a housing (5) and which reaches into both a variable pressure chamber (A) towards the main brake cylinder (HBZ) and a variable pressure chamber (D) towards the wheel brake cylinder (RBZ) and contains an axial bore (19), penetrated by a rod (20), between the two pressure chambers and has a valve cone (24) which is aligned on the same axis as the axial bore (19) and, in the case of a displacement of the piston (9) from its normal position towards the main brake cylinder (HBZ) as a consequence of a detected danger of blocking, closes the axial bore (19), characterised in that the piston (9) is displaceable from the normal position in the direction of the wheel brake cylinder (RBZ), and in that the axial bore (19) is associated with a second valve cone (25) which, in the case of a displacement of the piston (9) from its normal position towards the wheel brake cylinder (RBZ) in the event of an inadmissible drive slip detected by the sensor, closes the axial bore (19).

2. Plunger system according to Claim 1, characterised in that the axial bore (19) merges on both sides towards the pressure chambers (A, D) into valve bores (21, 22), forming a shoulder-like step (23), the rod (20) tapering in this region to give rod end portions (27), with formation of a shoulder (26) in each case, which are each occupied by an oppositely aligned, spring-loaded valve cone (24, 25) whose cone tips abut against the rod shoulder (26).

3. Plunger system according to Claim 2, characterised in that the piston (9), in the normal position, assumes a central position in which both valve cones (24, 25) abut against the particular rod shoulder (26), but form a free passage towards the shoulder-like step (23) of the valve bore (21, 22).

4. Plunger system according to at least one of Claims 1 to 3, characterised in that the piston (9), via a central piston portion (10), separates off two pressure chambers (B and C), which can alternately be subjected to pressure medium via a directional valve (30) and, if appropriate, inlets (31 or 32) from an energy supply system under control by the wheel sensor, so that the piston is axially displaceable.

5. Plunger system according to Claim 4, characterised in that the central piston portion (10) is supported in a pressure chamber (B) by a compression spring (12).

6. Plunger system according to Claim 5, characterised in that the compression spring (12) rests on one side on a spring disc (13) surrounding the piston (9) and, on the other side, abuts against a stop disc (11) underpinning the central piston portion (10).

7. Plunger system according to Claim 6, characterised in that, in the central position of the piston (9), the stop disc (11) abuts against a housing shoulder (14).

8. Plunger system according to one of Claims 5 to 7, characterised in that, by means of a spring in each of the pressure chambers (B, C) located on either side of the central piston portion (10), the central piston portion (10) abuts, by stop discs (11) provided on either side, against stop shoulders associated with the two pressure chambers (B, C).

9. Plunger system according to at least one of Claims 1 to 8, characterised in that the piston (9), via a rod (34) linked thereto, is coupled to a position pick-up for detecting the piston movement.

10. Method for modulating the brake pressure in the case of a danger, detected by a sensor, of blocking of wheels of a vehicle by means of a piston which is axially displaceable in a housing and which reaches on one side into a variable pressure chamber towards the main brake cylinder and on the other side into a variable pressure chamber towards the wheel brake cylinder and contains an axial bore, penetrated by a rod, between the two pressure chambers, the axial bore forming a connection which is closed in the event of wheels blocking, characterised in that the connection formed by the axial bore is also closed in the event of wheels spinning.

11. Method according to Claim 10, characterised in that the normal position of the piston is the central position in which the axial bore between the pressure chambers towards the main brake cylinder and towards the wheel brake cylinder is open.

12. Method according to Claim 10 or 11, characterised in that, in the event of wheels blocking, the piston is axially displaced in one direction and the axial bore is thus closed, whereas in the event of wheels spinning an axial displacement of the piston in the other direction and thus closing of the axial bore take place.

13. Method according to one of Claims 10 to 12, characterised in that the axial displacement of the piston is effected by alternately subjecting pressure chambers of the central piston portion to pressure medium.

**Revendications**

1. Système de plongeur (1) dans une conduite de frein (2) entre un cylindre principal de frein (HBZ) et un cylindre de frein sur roue (RBZ) d'un véhicule, destiné à moduler une pression de freinage en cas de danger de blocage des roues d'un véhicule, comprenant un piston (9) déplaçable axialement dans un boîtier (5), piston qui avance aussi bien dans une chambre de pression (A) variable en direction d'un cylindre principal de frein (HBZ), que dans une chambre de pression (D) variable en direction d'un cylindre de frein sur roue (RBZ) et qui comporte un alésage axial (19) parcouru par une tige (20) entre les deux chambres de pression et possède un premier cône de soupape (24), de direction coaxiale à l'alésage axial (19) et qui obstrue l'alésage axial (19) par un déplacement du piston (9) de sa position normale vers le cylindre principal de frein (HBZ) en cas de danger de blocage détecté, caractérisé

en ce que le piston (9) est mobile à partir de sa position normale en direction du cylindre de frein sur roue (RBZ) et en ce qu'un deuxième cône de soupape (25) est associé à l'alésage axial (19) pour obturer l'alésage axial (19) par un déplacement du piston (9) de sa position normale en direction du cylindre de frein sur roue (RBZ) à l'occasion d'un patinage moteur inadmissible, détecté par le capteur.

2. Système de plongeur selon la revendication 1, caractérisé en ce que l'alésage axial (19) se transforme des deux côtés vers les chambres de pression (A, D) en alésages de soupapes (21, 22) sous forme d'un talon de type épaulement (23), la tige (20) dans cette zone s'amincissant avec formation d'un épaulement (26) à chacune des parties terminales de la tige (27), qui sont munies chacune d'un cône de soupape (24, 25) dirigé en sens opposé l'un par rapport à l'autre et logé dans un ressort, cônes qui butent par leurs pointes contre l'épaulement de la tige.

3. Système de plongeur selon la revendication 2, caractérisé en ce que le piston (9) adapte en position normale une position médiane, dans laquelle les deux cônes de soupape (24, 25) butent contre l'épaulement de la tige respectif (26), en formant toutefois un passage libre vers le talon de type épaulement (23) de l'alésage de soupape (21, 22).

4. Système de plongeur selon au moins une des revendications 1 à 3, caractérisé en ce que le piston (9) détermine par sa partie médiane (10) deux chambres de pression (B et C), qui peuvent être alimentées en agent de pression par un système d'alimentation en énergie commandé par le capteur de roue au moyen d'un distributeur (30) et éventuellement de deux ajutages (31 respectivement 32) et en outre en ce que le piston peut se déplacer axialement.

5. Système de plongeur selon la revendication 4, caractérisé en ce que la partie médiane du piston (10) est appuyée dans une chambre de pression (13) contre un ressort de pression (12).

6. Système de plongeur selon la revendication 5, caractérisée en ce que le ressort de pression (12) repose par un de ses côtés sur une coupelle de ressort (13) entourant le piston (9) et de l'autre côté bute sur un disque de butée (11) étayant la partie médiane de piston (10).

7. Système de plongeur selon la revendication 6, caractérisé en c que le disque de butée (11), dans la position médiane du piston (9), bute contre un épaulement du boîtier (14).

8. Système de plongeur selon une des revendications 5 à 7, caractérisé en ce que par suite d'un ressort la partie médiane du piston (10) bute dans les chambres de pression (B, C) se trouvant des deux côtés de la partie médiane du piston avec des disques de butée (11) placés sur les deux faces contre des épaulements de butée associés aux deux chambres de pression (B, C).

9. Système de plongeur selon une au mono des revendications 1 à 8, caractérisé en ce que le piston (9) est couplé avec un distributeur par une tige (34) reliée avec lui pour détecter la course du piston.

10. Procédé pour moduler la pression de freinage en cas de danger de blocage détecté par un capteur, de roues d'un véhicule, comprenant un piston déplaçable axialement dans un boîtier, qui avance d'un côté dans une chambre de pression variable en direction du cylindre principal de frein et de l'autre côté dans une chambre de pression variable en direction du cylindre de frein sur roue et comporte un alésage axial traversé par une tige entre les deux chambres de pression, l'alésage axial constituant une communication qui est obstruée par le blocage des roues, caractérisé en ce que la communication formée par l'alésage axial est aussi fermée par le patinage des roues.

11. Procédé selon la revendication 10, caractérisé en ce que la position normale du piston est la position médiane, dans laquelle l'alésage axial entre les chambres de pression vers le cylindre principal de frein et vers le cylindre de frein sur roue est ouvert.

12. Procédé selon la revendication 10 ou la revendication 11, caractérisé en ce que pour le blocage des roues le piston est déplacé axialement dans une direction et par suite l'alésage axial se trouve fermé, alors que pour le patinage des roues a lieu un déplacement axial du piston dans l'autre direction et avec cela une obstruction de l'alésage axial.

13. Procédé selon une des revendications 10 à 12, caractérisé en ce que le déplacement axial du piston se fait par sollicitation alternative à partir des chambres de pression d'une partie médiane du piston par l'agent de pression.